# EUROPÄISCHE PATENTSCHRIFT

(11) **EP 0 737 861 B1**
(45) Veröffentlichungstag und Bekanntmachung des Hinweises auf die Patenterteilung: **02.05.2002**
(21) Anmeldenummer: 96250048.4
(22) Anmeldetag: 26.02.1996
(51) Int. Cl.: G01N 29/18

(54) **Verfahren und Vorrichtung zur zerstörungsfreien Ermittlung von Eigenschaften eines Werkstückes aus Metall**
Method and apparatus for non-destructive determination of properties of a metal component
Procédé et dispositif pour la détermination non-destructive des charactéristiques d'une pièce métallique

(30) Priorität: 03.04.1995 DE 19513312
(43) Veröffentlichungstag der Anmeldung: 16.10.1996
(73) Patentinhaber: Mannesmannröhren-Werke AG, 45473 Mülheim a.d. Ruhr (DE)
(72) Erfinder: Graff, Alfred, Dipl.-Phys., 45239 Essen (DE); Schlawne, Friedhelm, Dr.rer.nat., 47249 Duisburg (DE); Schneider, Heinz, Dr.-Ing., 40489 Düsseldorf (DE); Zeislmair, Ulrike, Dr.-Ing., 40670 Meerbusch (DE)
(74) Vertreter: Meissner, Peter E., Dipl.-Ing.

(56) Entgegenhaltungen:
- EP-A- 0 330 735
- US-A- 4 497 209
- US-A- 4 522 071
- PHILOSOPHICAL TRANSACTIONS OF THE ROYAL SOCIETY OF LONDON A (MATHEMATICAL AND PHYSICAL SCIENCES), 1986, UK, Bd. 320, Nr. 1554, ISSN 0080-4614, Seiten 187-198, XP002007494 SAYERS C M ET AL: "Texture and stress determination in metals by using ultrasonic Rayleigh waves and neutron diffraction"
- ACUSTICA, SEPT.-OCT. 1993, GERMANY, Bd. 79, Nr. 2, ISSN 0001-7884, Seiten 161-169, XP002007495 DEPUTAT J: "Ultrasonic measurement of residual stresses under industrial conditions"
- ULTRASONICS, SEPT. 1987, UK, Bd. 25, Nr. 5, ISSN 0041-624X, Seiten 288-294, XP002007496 VAN ZUMMEREN M ET AL: "Automatic determination of ultrasound velocities in planar materials"
- PATENT ABSTRACTS OF JAPAN vol. 014, no. 141 (P-1023), 16.März 1990 & JP-A-02 006746 (KAWASAKI STEEL CORP), 10.Januar 1990,

## Beschreibung

Die Erfindung betrifft ein Verfahren und eine Vorrichtung zur zerstörungsfreien Ermittlung der Streckgrenze eines Werkstückes aus Metall, insbesondere Blech gemäß dem Oberbegriff des Patentanspruches 1.

Die Überwachung der mechanisch-technologischen Eigenschaften beispielsweise von Großrohrblechen erfolgt derzeit zerstörend, indem Proben entnommen, bearbeitet und untersucht werden, z.B. Zerreißproben. Diese Untersuchungen sind, da sie das Material zerstören, nur punktuell durchführbar. Sie sind kostenintensiv, da eine sorgfältige Probenfertigung erforderlich ist und die Ergebnisse sind erst nach einer gewissen Zeitspanne verfügbar. Demzufolge sind zerstörungsfreie Verfahren sehr wünschenswert, da bereits eine Verringerung der Anzahl zu entnehmender Proben deutliche Einsparungen erbringen würde. Darüber hinaus erlauben sie eine schnellere Beurteilung des Werkstückes und damit eine Rückkopplung auf den Herstellungsprozeß.

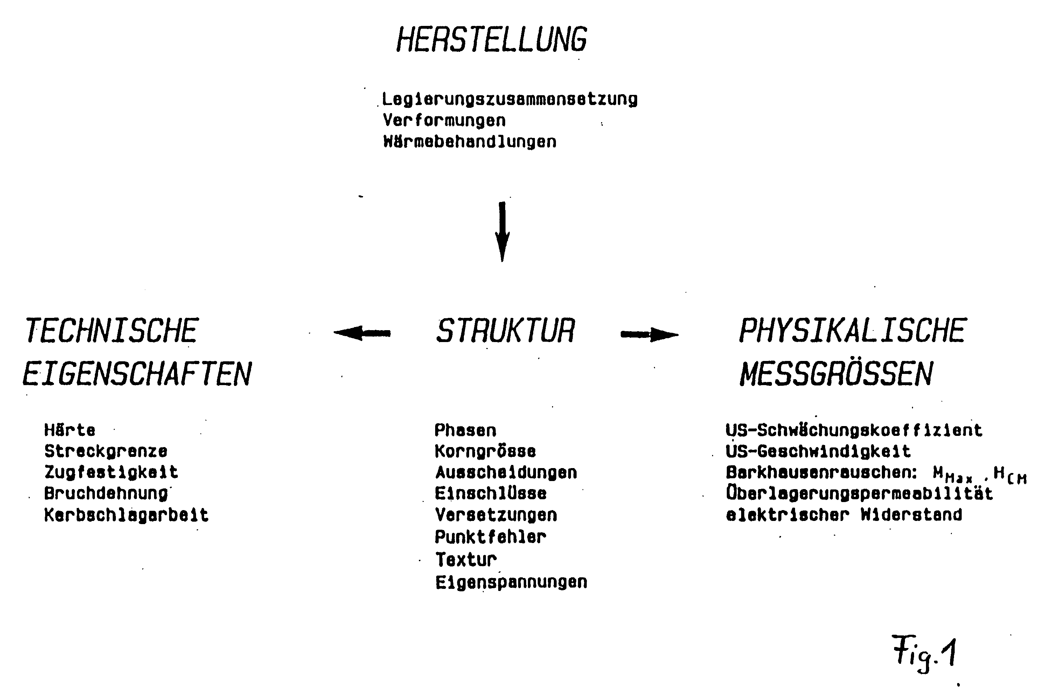

Die mechanisch-technologischen Eigenschaften insbesondere Streckgrenze sind jedoch nicht unmittelbar einer zerstörungsfreien Ermittlung zugänglich. Figur 1 verdeutlicht die Problematik. Die "Struktur" des verwendeten Materials wird durch den Herstellungsprozeß aufgrund vorliegender Erfahrungen eingestellt, z.B. durch geeignete Wahl der Legierungszusammensetzung, Verformungsbedingungen und Wärmebehandlung. Die technischen Eigenschaften des Materials werden von den Strukturparametern bestimmt, wobei jedoch in der Regel mehrere Elemente Einfluß auf die jeweils interessierende Größe haben. Auf der anderen Seite existieren zerstörungsfreie Verfahren, die an einem unpräparierten Werkstück eingesetzt werden können, deren physikalische Meßgrößen durch die Materialstruktur beeinflußt werden. Grob sind hier Ultraschallverfahren und magnetische sowie elektromagnetische Verfahren zu unterscheiden. Auch die einer Messung zugänglichen physikalischen Größen sind nicht nur von einem Strukturelement abhängig, sondern allgemein von einer Kombination. Eine einfache Verknüpfung der technischen Eigenschaften des Materials und der physikalischen Meßgrößen ist im allgemeinen Fall somit nicht möglich.

Aus der UK-Z=PHILOSOPHTICAL TRANSACTIONS OF THE ROYAL SOCIETY OF LONDON A ( Mathematical and Physical Sciences), 1986, UK, Bd.320, Nr1554,Seiten 187-198 sowie der DE-Z= ACUSTICA, Sept-Okt 1993, Bd.79, Nr.2, Seiten 161-169 sind Verfahren zur Ermittlung von Eigenspannungen durch Messung der Schallgeschwindigkeit bekannt.

Aus der US 45 22 071 sowie der US-Z= Ultrasonics, Vol. 25.September 1987;S.288294 ist ein Verfahren zur zerstörungsfreien Ermittlung von Eigenschaften eines Werkstückes aus Metall, insbesondere Blech, bekannt, bei dem koppelmittelfrei linear polarisierte, parallel zur Oberfläche sich ausbreitende Ultraschallwellen im Werkstück angeregt werden, am gleichen Prüfort die Laufzeiten der Ultrschallwellen in einer Hauptverformungsrichtung (T1) und senkrecht (T2) dazu in einem definierten Abstand zwischen den zwei Ultraschall-Wandlern bestimmt werden und die Differenzen der Meßwerte der Laufzeitmessung jeweils für die Messung der beiden Richtungen zur Bestimmung der (technischen) Materialeigenschaften ausgewertet werden.

Eine Kombination von unterschiedlichen Meßverfahren für Oberflächenwellen bzw. Transversalwellen ist durch die EP 0330735 A2 bekannt.Bei diesem Meßverfahren wird jedoch die Dämpfung von Ultraschallwellen ausgewertet.

Die elektromagnetische Erzeugung von Oberflächenwellen ist ferner durch die DE 26 23 266 A1 bekannt.

Schließlich zeigt die US-Z= J.Acoust Soc.Am. 91 (6); June 1992, S.3303-3312 die Bestimmung von Materialeigenschaften mittels des Meßobjekts durchlaufender Ultraschallwellen auf.

Aufgabe der Erfindung ist es, ein Verfahren zur zerstörungsfreien Ermittlung von Eigenschaften eines Werkstückes aus Metall insbesondere Blech anzugeben, mit dem in einfacher Weise eine das Werkstück charakterisierende technische Eigenschaft, wie die Streckgrenze, ermittelbar ist.

Diese Aufgabe wird mit den im kennzeichnenden Teil angegebenen Merkmalen gelöst. Vorteilhafte Weiterbildungen sowie eine Vorrichtung zur Durchführung des Verfahrens sind Bestandteile von Unteransprüchen.

Erfindungsgemäß werden unabhängig voneinander linear polarisierte Ultraschall-Transversalwellen und Ultraschall-Oberflächenwellen im Werkstück erzeugt. Gemessen werden die Laufzeiten der Ultraschall-Oberflächenwellen einmal in Hauptverformungsrichtung und senkrecht dazu in einem definierten Abstand zwischen zwei US-Wandlem sowie die Laufzeiten von linear polarisierten Transversalwellen über die Dicke des Werkstückes, wobei die Polarisationsrichtung einmal in Hauptverformungsrichtung und einmal senkrecht dazu gewählt wird. Die Meßwerte der Laufzeitmessung werden mindestens mit einer bekannten werkstoffspezifischen Kenngröße des Werkstückes korreliert. Was die Korrelation der Meßwerte der Laufzeitmessung betrifft, so wird vorzugsweise die prozentuale Differenz zwischen den Meßwerten in Hauptverformungsrichtung und senkrecht dazu berücksichtigt. Wesentlich für das erfindungsgemäße Verfahren ist, daß die Messungen an einem einzigen Meßort erfolgen unabhängig davon in welche Richtung gemessen wird.

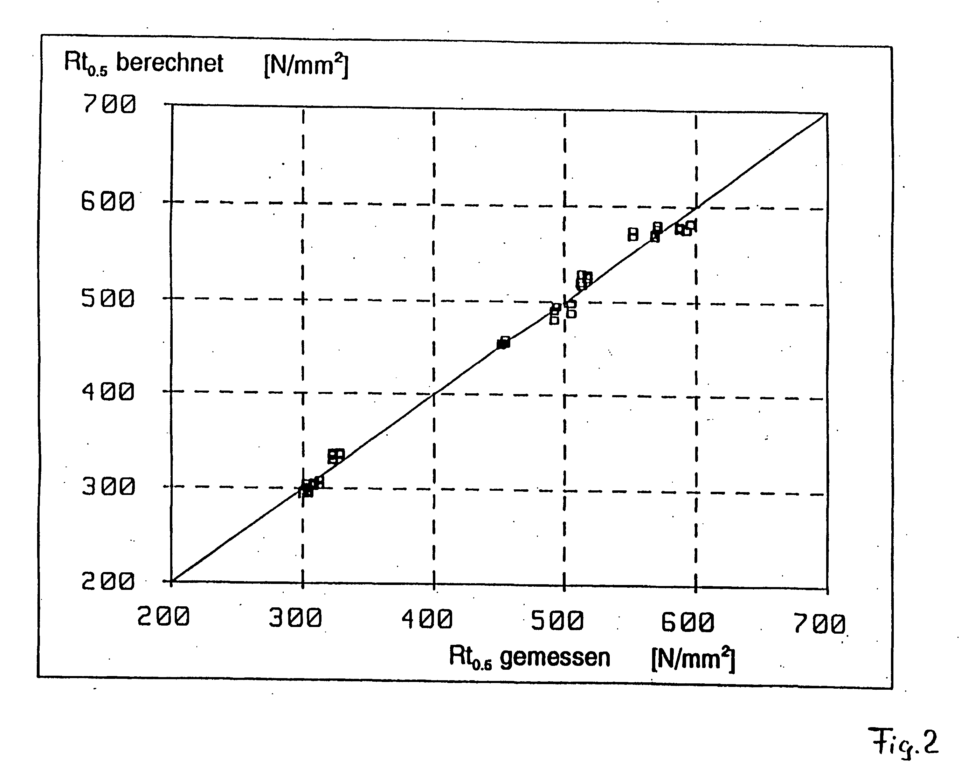

Versuche haben ergeben, daß die Korrelation der Meßwerte dann zu einer guten Übereinstimmung der aus den Meßdaten der zerstörungsfreien Prüfung ermittelten Streckgrenze mit denen über einen Zerreißversuch ermittelten führen, wenn die Nennanalyse und die nominale Dicke des Werkstückes in die Korrelation eingebracht werden. Bei thermomechanisch gewalzten Blechen ist es darüber hinaus zweckmäßig, auch die Endwalztemperatur mit einzubeziehen. Figur 2 zeigt ein Beispiel der guten Übereinstimmung zwischen ermittelter Streckgrenze unter Anwendung des erfindungsgemäßen Verfahrens und gemessenen Streckgrenzwerten auf der Basis von 48 Proben.

Zur Durchführung des erfindungsgemäßen Verfahrens wird eine Prüfkopfanordnung von drei Wandlern gewählt. Für die linear polarisierten Ultraschall-Transversalwellen wird ein Kombiwandler eingesetzt, bei dem Sende- und Empfangsspulen in einem Gehäuse untergebracht sind und für die Ultraschall-Oberflächenwellen sind zwei Wandler vorgesehen, die abstandsmäßig voneinander getrennt sind und wovon der eine als Sender und der andere als Empfänger ausgebildet ist. Bei den geradlinig in einem gemeinsamen Halter angeordneten drei Wandlern ist der Kombiwandler mittig angeordnet. Alle drei Wandler weisen zur Erzeugung des Magnetfeldes einen Permanentmagneten auf. Dies vereinfacht die Gesamtanordnung; da die für das Betreiben eines Elektromagneten erforderliche Stromversorgung und die meistenteils notwendige Kühlung der Spulen entfallen. Der Einsatz von Permanentmagneten ermöglicht auch eine kompakte Bauweise der Gesamtanordnung. Zur Erzeugung der Sendeströme für die jeweiligen Sendewandler und zur Verstärkung der Empfangssignale der Empfangswandler ist eine Vorortelektronik vorgesehen, die über ein Kabel von möglichst kurzer Länge mit dem Wandler verbunden ist.

Vorzugsweise werden die Oberflächenwandler mit einer Prüffrequenz von 1 MHz bei einer Pulsfolgefrequenz von =< 400 Hz und der Transversalwellenwandler vorzugsweise mit einer Prüffrequenz von 6 MHz und einer Pulsfolgefrequenz von =< 2 KHz betrieben.

Bei ferromagnetischen Werkstücken werden die mit Permanentmagneten versehenen Wandler stark angezogen. Damit die Prüfkopfanordnung sanft auf die Oberfläche des Werkstückes aufgesetzt und gedreht werden kann, wird quasi als Gegenkraft ein Pneumatikzylinder angeordnet.

Für den Anwendungsfall der Prüfung eines Bleches ist folgender Ablauf vorgesehen:
- Anhalten des Bleches in Prüfposition
- Aufsetzen der Wandler auf das Blech
- Messung mit einer Meßdauer von weniger als 10 sec
- Abheben der Wandler
- Drehung um 90°
- emeutes Aufsetzen der Wandler
- erneute Messung mit einer Messdauer von weniger als 10 sec
- Abheben der Wandler
- Wegfahren des Bleches
- Zurückdrehen des Halters auf die Ausgangsposition.

Die Vorteile des erfindungsgemäßen Verfahrens sind darin zu sehen, daß der Probenaufwand reduziert wird. Das gilt insbesondere für die Probenahme, die für die interne Qualitätssicherung erforderlich ist. Die Werte stehen sofort zur Verfügung und können on-line mit den Herstellparametem im Sinne der Optimierung des Fertigungsprozesses genutzt werden. Mit dem erfindungsgemäßen Verfahren ist eine 100%-Prüfung möglich, d.h. jedes einzelne Werkstück wird geprüft. Bei der konventionellen Prüfung per Probenahme sind immer nur Stichproben möglich, meistens pro Walzlos. Darüber hinaus können mit dem vorgeschlagenen Verfahren auch andere Bereiche, z.B. der Mittenbereich, geprüft werden, während die Probenahme immer nur am Rand erfolgt. Als weiterer Vorteil ist zu nennen, daß zur Überprüfung der Gleichmäßigkeit der Eigenschaften stichprobenweise beispielsweise ein Blech über die gesamte Fläche geprüft werden kann. Weiterhin ist von Bedeutung, daß das jeweils verkaufte Erzeugnis geprüft wird und die Prüfung zu einem späteren Zeitpunkt an gleicher Stelle wiederholt werden kann. Demgegenüber ist die Probenahme für die zerstörende Prüfung nur einmal möglich.

Bei Anwendung des Verfahrens auf das fertige Rohr, insbesondere Großrohr, erfaßt die vorgeschlagene zerstörungsfreie Prüfung den Ist-Zustand einschl. der Inhomogenitäten, die durch den Biegeprozeß mittels des mechanischen Expanders hervorgerufen werden. Außerdem kann mit dem erfindungsgemäßen Verfahren die gesamte Fläche geprüft werden und nicht nur der Randbereich, in dem die Probe für die zerstörende Prüfung entnommen wurde. Außerdem wird der ermittelte Streckgrenzenwert nicht durch den Bauschinger-Effekt verfälscht, der beim Zurückbiegen der Proben auftritt.

In der Zeichnung wird das erfindungsgemäße Verfahren näher erläutert. Es zeigen:
- Figur 1: eine Prinzipdarstellung des Zusammenhanges zwischen Herstellungsparametern, der erzeugten Struktur sowie den technischen Eigenschaften und den physikalischen Meßgrößen.
- Figur 2: ein Beispiel der guten Übereinstimmung zwischen ermittelter Streckgrenze unter Anwendung des erfindungsgemäßen Verfahrens und gemessenen Streckgrenzenwerten auf der Basis von 48 Proben.
- Figur 3: Eine Prinzipdarstellung der Prüfelektronik.
- Figur 4: Einen Blick von unten auf die Anordnung der Prüfkopfwandler.

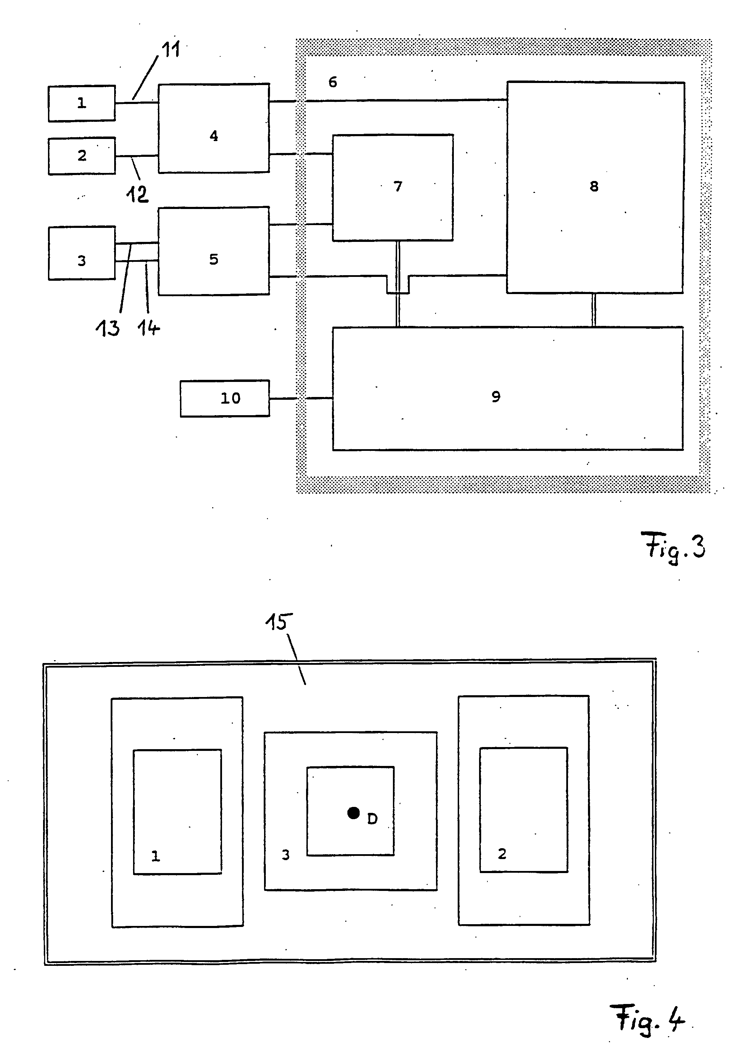

In Figur 3 ist in einer Prinzipdarstellung die Prüfelektronik dargestellt. Mit Bezugszeichen 1 ist der Oberflächen-Sendewandler gekennzeichnet zur Erzeugung der Ultraschall-Oberflächenwellen. Mit Bezugszeichen 2 der Oberflächen-Empfangswandler für den Empfang der Ultraschall-Oberflächenwellen. Der Transversalwellenwandler 3 in Form eines Kombiwandlers sendet und empfängt linear polarisierte Transversalwellen. Die Vorortelektronik 4, 5 erzeugt die Sendeströme für den Sendewandler 1 und die Sendespule des Transversalwellenwandlers 3. Die Vorortelektronik 4, 5 beinhaltet auch den Vorverstärker zur Verstärkung der Empfangssignale des Empfangswandlers 2 und der Empfangsspule des Transversalwellenwandlers 3. Alternativ kann die Vorverstärkung im jeweiligen Prüfkopf 2.3 selbst integriert sein. Die Kabel 11 bis 14 zur Verbindung der Wandler 1 bis 3 mit der Vorortelektronik 4, 5 sind aus Gründen der Dämpfung möglichst kurz. Die Prüf- und Auswerteelektronik 6 beinhaltet neben den Komponenten Signalquelle 7, Digitaloszilloskop 8. Rechner 9 mit angeschlossenem Drucker 10 einen hier nicht dargestelten Konstanter. Sie erzeugt die Sendesignale, die in der Vorortelektronik 4, 5 verstärkt werden und verarbeitet die vorverstärkten Empfangssignale und führt die Auswertung durch. Femer dient sie zur Dokumentation, zur Elektroniksteuerung und zur Kommunikation mit der Prüfmechanik und mit dem Benutzer. In Figur 4 ist mit Blick von unten die grundsätzliche Anordnung der Wandler 1 bis 3 dargestellt. Alle drei Wandler 1 bis 3 sind auf einem gemeinsamen Halter 15 angeordnet, der um den Drehpunkt D schwenkbar ist. Der Transversalwellenwandler 3 ist mittig angeordnet zwischen dem Oberflächenwellensender 1 und dem Oberflächenempfangswandler 2. Durch den festgelegten Drehpunkt D wird sichergestellt, daß die Laufzeitmessungen am gleichen Prüfort durchgeführt werden.

## Patentansprüche

1. Verfahren zur zerstörungsfreien Ermittlung der Streckgrenze eines Werkstückes aus Metall, insbesondere Blech, bei dem koppelmittelfrei Ultraschallwellen im Werkstück angeregt und die von den elastischen Konstanten des Werkstoffes abhängigen Schallgeschwindigkeiten verschiedener Wellenarten unter Berücksichtigung der Anisotropie des Werkstückes gemessen werden, wobei unabhängig voneinander linear polarisierte Transversalwellen und Ultraschall-Oberflächenwellen im Werkstück angeregt und am gleichen Prüfort die Laufzeiten der Ultraschall-Oberflächenwellen in Hauptverformungsrichtung und senkrecht dazu in einem definierten Abstand zwischen zwei US-Wandlern sowie die Laufzeiten von linear polarisierten Transversalwellen über die Dicke des Werkstückes, wobei die Polarisationsrichtung einmal in Hauptverformungsrichtung und einmal senkrecht dazu gewählt wird, bestimmt werden, und daß die Meßwerte der Laufzeitmessungen mindestens mit einer werkstoffspezifischen Kenngröße des Werkstückes korreliert werden, wobei für die Korrelation der Meßwerte der Laufzeitmessungen die Differenz zwischen den Meßwerten in Hauptverformungsrichtung und senkrecht dazu berücksichtigt werden.

2. Verfahren nach Anspruch 1,
**dadurch gekennzeichnet,**
**daß** eine Nennanalyse und die nominale Dicke des Werkstückes in die Korrelation einbezogen werden.

3. Verfahren nach Anspruch 2,
**dadurch gekennzeichnet,**
**daß** bei thermomechanisch gewalzten Blechen zusätzlich die Endwalztemperatur des Werkstückes in die Korrelation einbezogen wird.

4. Vorrichtung zur Durchführung des Verfahrens nach Anspruch 1 zur Ermittlung der Streckgrenze eines Werkstückes aus Metall, mit als Sender und Empfänger ausgebildeten elektromagnetischen Ultraschall-Wandlem (EMUS), die in einem gemeinsamen Wandlerträger angeordnet und über Kabel mit einer Elektronikanlage verbunden sind, zur Erzeugung/Empfangen von Oberflächenwellen, wobei für die linear polarisierten Ultraschall-Transversalwellen ein Wandler (3) eingesetzt wird, bei dem Sende- und Empfangsspulen in einem Prüfkopfgehäuse untergebracht sind und für die Ultraschall-Oberflächenwellen abstandsmäßig voneinander getrennt je ein Sender (1) und ein Empfänger (2) vorgesehen sind und alle drei Wandler (1,2,3) geradlinig auf dem Halter (15) befestigt sind, wobei der Wandler (3) mittig angeordnet ist und alle drei Wandler (1,2,3) einen Permanentmagneten aufweisen und der Mittelpunkt des Wandlers (3) den Drehpunkt (D) für den Halter (15) bildet.

5. Vorrichtung nach Anspruch 4,
**dadurch gekennzeichnet,**
**daß** zur Erzeugung der Sendeströme für die jeweiligen Sendewandler (1,3) und zur Verstärkung der Empfangssignale der Empfangswandler (2,3) eine Vorortelektronik (4,5) vorgesehen ist, die über kurze Kabel( 11-14) mit den Wandlern (1,2,3) verbunden ist.

6. Vorrichtung nach den Ansprüchen 4 und 5,
**dadurch gekennzeichnet,**
**daß** die Oberflächenwandler (1,2) vorzugsweise mit einer Prüffrequenz von 1 MHz bei einer Pulsfolgefrequenz ≤ 400 Hz und der Transversalwellenwandler (3) vorzugsweise mit einer Prüffrequenz von 6 MHz und einer Pulsfolgefrequenz von ≤ 2 KHz betrieben werden.

7. Vorrichtung nach Anspruch 4,
**dadurch gekennzeichnet,**
**daß** zum Drehen des Halters (1 5) und zum Aufsetzen auf das Werkstück der Halter (1 5) mit einem steuerbaren Mittel verbunden ist.

8. Vorrichtung nach Anspruch 7,
**dadurch gekennzeichnet,**
**daß** das Mittel ein Pneumatikzylinder ist.

## Claims

1. A method for the non-destructive determination of the yield point of a workpiece made of metal, in particular metal sheet, in which ultrasonic waves are induced without coupling medium in the workpiece and the sound velocities of different wave types which are dependent on the elastic constants of the material are measured, taking into account the anisotropy of the workpiece, where independently of each other linearly polarised transverse waves and ultrasonic surface waves are induced in the workpiece and at the same test location the transit times of the ultrasonic surface waves in the main direction of deformation and at right-angles thereto at a defined distance between two ultrasonic transducers and the transit times of linearly polarised transverse waves across the thickness of the workpiece, with the direction of polarisation being selected once in the main direction of deformation and once at right-angles thereto are determined, and that the measured values of the transit-time measurements are correlated at least with a material-specific characteristic of the workpiece, with the difference between the measured values in the main direction of deformation and at right-angles thereto being used for the correlation of the measured values of the transit-time measurements.

2. A method according to Claim 1, **characterised in that** a nominal analysis and the nominal thickness of the workpiece are included in the correlation.

3. A method according to Claim 2, **characterised in that** in the case of thermomechanically-rolled sheets the final rolling temperature of the workpiece is additionally included in the correlation.

4. An apparatus for performing the process according to Claim 1 for determining the yield point of a metal workpiece, with electromagnetic ultrasonic transducers (EMUS) in the form of transmitters and receivers which are arranged in a common transducer holder and are connected via cables to an electronic unit, for the generation/reception of surface waves, wherein a transducer (3) in which transmission and reception coils are housed in a test head housing is used for the linearly polarised ultrasonic transverse waves, and a transmitter (1) and a receiver (2) are provided, spaced apart from each other, for the ultrasound surface waves, and all three transducers (1, 2, 3) are fastened on the holder (15) in a straight line, the transducer (3) being arranged centrally and all three transducers (1, 2, 3) having a permanent magnet and the centre point of the transducer (3) forms the pivot point (D) for the holder (15).

5. An apparatus according to Claim 4, **characterised in that** local electronic units (4, 5) which are connected to the transducers (1, 2, 3) via short cables (11-14) are provided in order to generate the transmitting currents for the respective transmitting transducers (1, 3) and to amplify the received signals of the reception transducers (2, 3).

6. An apparatus according to Claims 4 and 5, **characterised in that** the surface transducers (1, 2) are preferably operated at a test frequency of 1 MHz at a pulse frequency of ≤ 400 Hz and the transverse wave transducer (3) is preferably operated at a test frequency of 6 MHz and a pulse frequency of ≤ 2 kHz.

7. An apparatus according to Claim 4, **characterised in that** the holder (15) is provided with a controllable means for turning the holder (15) and for placing it on the workpiece.

8. An apparatus according to Claim 7, **characterised in that** the means is a pneumatic cylinder.

## Revendications

1. Procédé pour la détermination non destructive de la limite élastique d'une pièce en métal, en particulier d'une tôle, dans lequel des ondes ultrasonores sans moyen de couplage sont excitées dans la pièce et les vitesses du son dépendant des constantes élastiques de la matière de différents types d'ondes sont mesurées en tenant compte de l'anisotropie de la pièce, des ondes de surface ultrasonores et des ondes transversales linéairement polarisées indépendamment les unes des autres étant excitées dans la pièce et, au même endroit de test, les temps de parcours des ondes de surface ultrasonores dans la direction de déformation principale et perpendiculairement à celle-ci à une distance définie entre deux convertisseurs US, ainsi que les temps de parcours d'ondes transversales linéairement polarisées sur l'épaisseur de la pièce, la direction de polarisation étant pour cela choisie une fois dans la direction de déformation principale et une fois perpendiculairement à celle-ci, étant déterminés et les valeurs des mesures des temps de parcours étant corrélées au moins avec une grandeur caractéristique, spécifique de la matière, de la pièce, la différence entre les valeurs de mesure dans la direction de déformation principale et perpendiculairement à celle-ci étant prise en compte pour la corrélation des valeurs des mesures des temps de parcours.

2. Procédé selon la revendication 1,
**caractérisé en ce qu'**une analyse nominale et l'épaisseur nominale de la pièce sont intégrées dans la corrélation.

3. Procédé selon la revendication 2,
**caractérisé en ce que**, dans le cas de tôles laminées de façon thermomécanique, la température de laminage final de la pièce est de plus intégrée dans la corrélation.

4. Dispositif pour la mise en oeuvre du procédé selon la revendication 1 pour la détermination de la limite élastique d'une pièce en métal, comportant des convertisseurs ultrasonores électromagnétiques (EMUS) réalisés comme émetteurs et récepteurs, qui sont agencés dans un support commun de convertisseur et sont reliés par des câbles à une installation électronique, pour engendrer/recevoir des ondes de surface, un convertisseur (3) étant utilisé pour les ondes transversales ultrasonores linéairement polarisées, dans lequel des bobines d'émission et de réception sont agencées dans un boîtier de tête de test et, à chaque fois, un émetteur (1) et un récepteur (2) sont prévus à distance l'un de l'autre pour les ondes de surface ultrasonores, et tous les trois convertisseurs (1, 2, 3) sont fixés en ligne droite sur le support (15), le convertisseur (3) étant agencé de façon centrale et tous les trois convertisseurs (1, 2, 3) présentant un aimant permanent et le centre du convertisseur (3) formant le pivot (D) pour le support (15).

5. Dispositif selon la revendication 4,
**caractérisé en ce que**, pour engendrer les courants d'émission pour les convertisseurs d'émission respectifs (1, 3) et pour amplifier les signaux de réception des convertisseurs de réception (2, 3), il est prévu une électronique in situ (4, 5), qui est reliée par l'intermédiaire de courts câbles (11 - 14) aux convertisseurs (1, 2, 3).

6. Dispositif selon les revendications 4 et 5,
**caractérisé en ce que** les convertisseurs de surface (1, 2) fonctionnent avantageusement à une fréquence de test de 1 MHz pour une fréquence de répétition des impulsions ≤ 400 Hz et le convertisseur d'ondes transversales (3) fonctionne avantageusement à une fréquence de test de 6 MHz et à une fréquence de répétition des impulsions ≤ 2 KHz.

7. Dispositif selon la revendication 4,
**caractérisé en ce que**, pour faire tourner le support (15) et pour la mise en place sur la pièce, le support (15) est relié à un moyen commandable.

8. Dispositif selon la revendication 7,
**caractérisé en ce que** le moyen est un vérin pneumatique.
